# EUROPEAN PATENT SPECIFICATION

(11) **EP 2 148 575 B1**
(45) Date of publication and mention of the grant of the patent: **31.10.2012**
(21) Application number: 08756171.8
(22) Date of filing: 23.05.2008
(51) Int. Cl.: A23G 4/08

(54) **IMPROVED CHEWING GUM CONTAINING SOLUTION STYRENE BUTADIENE RANDOM COPOLYMER ELASTOMER**
VERBESSERTER KAUGUMMI MIT LÖSUNGSPOLYMERISIERTEM STYROL-BUTADIEN-RANDOM-COPOLYMER-ELASTOMER
CHEWING-GUM AMÉLIORÉ CONTENANT UN ÉLASTOMÈRE DE COPOLYMÈRE ALÉATOIRE DE STYRÈNE-BUTADIÈNE EN SOLUTION

(30) Priority: 25.05.2007 US 940283 P
(43) Date of publication of application: 03.02.2010
(73) Proprietor: WM. Wrigley Jr. Company, Chicago, IL 60622 (US)
(72) Inventor: DONAIRE, Pere Ruiz, E-08830 Barcelona (ES); ESTRUCH, Roser Amposta, E-08029 Barcelona (ES); SONG, Joo H., Chicago, IL 60605 (US); LIU, Jingping, Indian Head Park, IL 60525 (US); XIA, Xiaohu, Evanston, IL 60201 (US); HAN, Xiangmin, Stow, OH 44224 (US)
(74) Representative: Murphy, Colm Damien
(86) International application number: PCT/US2008/064637
(87) International publication number: WO 2008/147947

(56) References cited:
- WO-A-2007/076425
- US-A1- 2003 138 519

## Description

### BACKGROUND OF THE INVENTION

The present invention relates to chewing gum. More specifically, this invention relates to improved formulations for chewing gum bases and chewing gum containing solution styrene butadiene random copolymer elastomer.

Primary components of a chewing gum typically are a water-insoluble gum base portion and a water-soluble bulking agent portion including a binder together with minor amounts of secondary components such as flavors, colorants, water-soluble softeners, gum emulsifiers, acidulants and sensates. Typically, the water-soluble portion, sensates and flavors dissipate during chewing and the gum base is retained in the mouth throughout the chew.

Insoluble gum base typically includes elastomers, elastomer plasticizers, softeners including resins and fats and oils, and inorganic fillers. Elastomers typically are synthetic elastomers such as polyisobutylene, isobutylene-isoprene copolymers ("butyl rubber"), conventional styrene-butadiene copolymers, polyisoprene, and combinations thereof. Also, natural elastomers such as natural rubbers can be used.

Because the elastomer component of a gum base is a significant portion of a gum formulation, the characteristics of such elastomer are important to the gum composition, especially regarding those properties important to consumer acceptance. Among properties important to consumers are odor, taste, chewing properties, and mouthfeel, including an ability of a gum composition to form a cud while chewing.

The elastomer most widely used in chewing gum is butyl rubber based on consumer acceptance of chewing properties for a resulting chewing gum product and a lack of objectionable odor or taste associated with butyl rubber. Polyisobutylene (PIB) is another elastomer frequently used in gum bases. Lower molecular weight (below 500,000) PIB improves compatibility of base components and softens the chewing characteristics of gum bases to which it is added. Higher molecular weight PIB acts more like butyl rubber, but its use is much less common. Styrene butadiene copolymer rubber (SBR) has been described as useful as an elastomer in gum products. Conventionally, SBR used in gums is manufactured by an emulsion polymerization process. In fact, conventional SBR is used as an elastomer component in bubble gum; however such SBR has not found commercial acceptance in other chewing gums due to an objectionable odor associated with emulsion SBR.

US 2003/0138519 A1 discloses an emulsion polymerization technique for synthesizing SBR having improved taste an odour, that can be used in manufacturing chewing gum base for soft chew applications.

Although SBR has desirable attributes such as lower cost and greater availability than butyl rubber, conventional SBR has not been used widely in chewing gum (other than bubble gum).

There is a need for alternative elastomer materials having greater commercial availability and lower cost than butyl rubber, which are consumer acceptable for wide categories of chewing gum products.

### SUMMARY OF THE INVENTION

A gum base useful in this invention contains a solution-polymerized styrene-butadiene random copolymer elastomer which is cud-forming and chewable at mouth temperature.

Further, a chewing gum of this invention contains a water-insoluble gum base portion containing a solution-polymerized styrene-butadiene random copolymer elastomer which is cud-forming and chewable at mouth temperature; a water-soluble bulk portion; and at least one flavor component.

### DESCRIPTION OF THE INVENTION

The present invention provides improved chewing gum base formulations and chewing gum formulations. In some embodiments, the present invention provides gum base formulations and chewing gums containing such bases, in which the gum base includes a non-butyl rubber elastomeric component (i.e., an elastomeric component which does not contain butyl rubber) and yet possesses one or more of the advantageous properties generally associated with butyl rubber-containing gum bases. More particularly, the present invention is directed to a gum base in which the elastomeric component includes a solution-polymerized styrene-butadiene rubber ("S-SBR" or "solution SBR"), which is a random copolymer elastomer.

A variety of base and chewing gum formulations including S-SBR can be created or used in accordance with the present invention. The base formulations of the present invention may be conventional bases which include wax or are wax-free, tacky or non-tacky and/or bubble gum-type bases. The gum formulations can be low or high moisture formulations containing low or high amounts of moisture-containing syrup. S-SBR also can be used in low sugar and non-sugar containing gum formulations made with sorbitol, mannitol, other polyols, and non-sugar carbohydrates. Non-sugar formulations can include low or high moisture sugar-free chewing gums (i.e., gums having a moisture content of less than about 2 wt.%, or between about 2 and about 5 wt.%, respectively).

In an embodiment, S-SBR is used as an elastomer and may be combined with other base elastomers for use in chewing gum base. Such other elastomers include synthetic elastomers including polyisobutylene, isobutylene-isoprene copolymers, conventional styrene-butadiene copolymers (i.e., emulsion polymerized SBR ("E-SBR")), polyisoprene, and combinations thereof. Natural rubber also may be used as an elastomer in a gum base.

In an embodiment, S-SBR is used as an elastomer in chewing gum formulations to replace typical chewing gum elastomers.

The S-SBR, when used according to the present invention, affords the chewing gum an improved texture and improved flavor quality. Even though S-SBR is similar to other elastomers in some respects, random S-SBR creates a resultant chewing gum product which has a high consumer-acceptability, especially for lack of objectionable taste or odor.

Additional features and advantages of the present invention are described in, and will be apparent from, the detailed description of the presently preferred embodiments.

### I. Styrene Butadiene Rubber (SBR)

Styrene butadiene rubber (SBR) synthetic rubber elastomer copolymer is made primarily for rubber tires. However, a small portion of SBR commercial production is food grade synthetic rubber suitable for chewing gum. Emulsion polymerization was the first method used to produce SBR as a replacement for natural rubber used in tires and is the most common method for SBR manufacture today due to the suitability to produce high volumes of SBR at relatively low cost. A typical emulsion system contains water, monomers, an initiator, and an emulsifier, which is usually a fatty acid soap. Typical SBR food grade elastomers that are used for chewing gum contain from about 5% to about 50% bound styrene content. Two standard emulsion SBR elastomers used in gum base contain: a) about 50% bound styrene or a 1:1 ratio of styrene to butadiene, or b) about 25% bound styrene or a 1:3 ratio of styrene to butadiene.

Another synthetic styrene butadiene rubber (SBR) is made by a solution process. The solution process is carried out in a suitable solvent for the monomers (including, for example, hexane) and uses free radical initiators, such as alkyl lithium catalysts, an example of which is butyl lithium ("BuLi"). Solution polymerization allows for control of the microstructure, molecular weight, and branching of the polymer to a greater degree than does emulsion polymerization. For example, solution SBR polymers are generally linear and exhibit less branching (especially long chain branching) as compared to emulsion SBR polymers. In addition, SBR polymers produced by solvent polymerization exhibit a higher purity and contain a lower proportion of non-rubber constituents. The increased purity of the polymer currently is believed to be due, at least in part, to the absence of emulsifier residue. Increased purity of the polymer may provide a polymer which has a reduced (i.e., more neutral) taste that may be preferred for use in chewing gum bases. Preparation of food-grade solution SBR elastomers requires removal of the solvent, and also removal of the catalyst. In addition to providing advantages over emulsion SBR, the narrower molecular weight distribution, relatively low branching, and increased purity of solution SBR polymers make them advantageous since these features are similar to those exhibited by butyl rubber (the common name for a copolymer of isobutylene and isoprene), a polymer commonly used in chewing gum bases. For example, the microstructures of S-SBR and E-SBR generally vary, and indicate variations in certain properties of the copolymers. The proportion of 1,2-addition and/or 1,4-trans structures are believed to vary between S-SBR and E-SBR, and impact the glass transition temperature (Tg) (determined using differential scanning calorimetry (DSC) in accordance with means generally known in the art) of the copolymers. In particular, 1,2-addition generally provides a higher Tg than does 1,4-addition, and 1,4-trans addition generally provides a higher Tg than does 1,4-cis addition. As shown in the following table, the E-SBR sample having a higher proportion of 1,4-trans and 1,2-addition structures exhibited the higher glass transition temperature.

| Sample | Styrene (wt.%) | Butadiene segment microstructure | T_{g} (DSC) |
|---|---|---|---|
| S-SBR | 23.5 | 31 %cis, 38%trans, 8% 1,2-addition | -64°C |
| E-SBR | 23.5 | 9% cis, 54% trans, 13% 1,2-addition | -50°C |

Thus, S-SBR polymers useful in the present invention currently are believed to be a suitable alternative to butyl rubber. Accordingly, various embodiments of the present invention are directed to non-butyl rubber gum bases (i.e., gum bases including an elastomeric component that is free of butyl rubber).

Similar to emulsion SBR, the level of bound styrene in S-SBR generally is from about 5% to about 60%, based on the total weight of the polymer. In various embodiments, the bound styrene content of the S-SBR of the present invention generally is at least 5%, typically at least 10% and preferably at least 15% and more preferably up to 25% and ranges up to about 60% and generally up to 50%, typically up to 45%, and preferably up to 40%, based on the total polymer weight.

Many of the rubber companies which produce SBR polymers make both emulsion SBR and solution SBR. Examples of some typical solution SBR polymers are Duradene manufactured by Firestone, SE SLR by Dow Chemical, Calprene and Solprene by Dynasol Elastomers, and Solflex by Goodyear. Additionally, S-SBR is available from Petroflex of Rio de Janeiro, Brazil. Since there are various known processes using various known initiators, catalysts, and emulsifiers for making SBR by these various manufacturers, preferably those processes that use food approved materials to make food acceptable or food approved S-SBR are preferable. However, there are currently no food grade S-SBRs commercially available to the chewing gum industry, but some suppliers currently make food contact approved S-SBR. Food contact approved S-SBR may be upgraded to food approval and thus could be used in chewing gum formulations. Examples of food contact approved S-SBRs are Duradene 706 and 741. Typical properties of these S-SBR polymers are as follows:

| Sample | Styrene Content wt.% | Mooney Viscosity (ML/4/100°C) | Antioxidant | Antioxidant Level (%) | Grade | Catalyst |
|---|---|---|---|---|---|---|
| Duradene 706 | 23.5 | 55 | TNPP/Irganox 1076 | 0.6/0.2 | Food contact | BuLi |
| Duradene 711 | 18 | 70 | Santoflex 77PD | 0.0225 | | BuLi |
| Duradene 741 | 5 | 60 | BHT | 0.5 | Food contact | BuLi |

In a particular embodiment, the SBR polymer (i.e., S-SBR, alone or in combination with E-SBR) used in accordance with the present invention is prepared using reagents that have been approved for preparing food-grade polymeric materials (e.g., hexane solvent, butylated hydroxytoluene (BHT) or butylated hydroxyanisole (BHA) as the antioxidant, and butyl lithium as the catalyst).

In a preferred embodiment, the S-SBR useful in the present invention (or alternatively the blend of the present invention containing S-SBR), will possess one or more of the known properties of butyl rubber, which is currently the most commonly used elastomer for chewing gum or chewing gum bases.

An elastomer useful in this invention is a polymeric material which tends to return to its original shape when a stress is removed. When formulated into a gum base, such gum base will partially recover (typically up to about 50% or more) after deformation during chewing. Typical elastomers useful in this invention have an elongation to break in excess of 150% and preferably in excess of 200%. Solution SBR's useful in this invention are capable of being formulated as gum bases with typical additional gum composition components such as bulking agents and flavors to form a composition which functions as a chewing gum. For example, a suitable S-SBR when formulated into a gum base is capable of forming a cud during chewing. That is, the elastomer, alone or in combination with other gum base components, possesses sufficient cohesiveness such that a discrete body is formed during chewing. Further, a suitable S-SBR elastomer, alone or in combination with other gum base components, is capable of being chewed at typical mouth temperature, i.e., 35 to 40 °C.

A typical S-SBR useful in this invention has and a Mooney viscosity (ML 1+4 at 100°C) above 50 and usually above 55 any typically up to 75 and usually up to 70. A typical range is 52 to 72. More preferably, the S-SBR has a Moony viscosity between 57 and 67 and still more preferably about 60.

A typical S-SBR useful in this invention has a molecular weight of at least 250,000 and preferably at least 300,000. Further, a typical S-SBR useful in this invention has a molecular weight less than 750,000 and preferably less than 600,000. Most preferably, the S-SBR useful in this invention has a molecular weight of about 500,000. However, S-SBR's may be useful outside those ranges if the elastomer is sufficiently cohesive and chewable at body temperature.

### II. Gum Base and Chewing Gum Formulations Containing S-SBR

S-SBR can be used in a variety of different chewing gum and gum base formulations. S-SBR typically comprises about one weight percent (1 wt.%) to about 40 wt.% of the chewing gum base, preferably about 2 wt.% to about 30 wt.%, and more preferably about 5 wt.% to about 20 wt.% of the gum base. As a result, S-SBR will typically be, in various embodiments, about 0.2 wt.% to about 20 wt.% of the chewing gum formulations.

Water-insoluble gum base generally contains elastomers, elastomer plasticizers, softeners including resins and fats and oils, emulsifiers and inorganic fillers. The gum base may or may not include paraffin wax as a softener. The insoluble gum base can constitute approximately 5 to about 95 percent, by weight, of the chewing gum; more commonly, the gum base comprises 10 to about 50 percent of the gum; and in some preferred embodiments, 20 to about 35 percent, by weight, of the chewing gum.

Gum bases may contain natural or synthetic elastomers, may contain wax and may be wax free. S-SBR may be used in conventional gum base formulations, in bubble gum formulations, or non-tack gum base formulations. Gum formulations may be used for stick gums, tab gums, coated pellet gums, center filled gums, or may be sugar or sugar-free chewing gums.

In an embodiment, the chewing gum base of the present invention contains about 10 to about 50 weight percent synthetic elastomer, 0 to about 30 weight percent natural elastomer, about 5 to about 55 weight percent elastomer plasticizer, about 4 to about 35 weight percent filler, about 5 to about 35 weight percent softener, and optional minor amounts (about one percent or less) of miscellaneous ingredients such as colorants, antioxidants, and the like.

Conventional synthetic elastomers include, but are not limited to, polyisobutylene with a GPC (gel permeation chromatography) weight average molecular weight of about 10,000 to about 95,000 (i.e., "low" molecular weight PIB); polyisobutylene with a GPC weight average molecular weight of greater than about 200,000 (i.e., "high" molecular weight PIB); isobutylene-isoprene copolymer (butyl elastomer); conventional emulsion-produced styrene-butadiene copolymers having styrene-butadiene ratios of about 1:1 to about 1:3. Natural elastomers may include natural rubber such as smoked or liquid latex and guayule as well as natural gums such as jelutong, lechi caspi, perillo, sorva, massaranduba balata, massaranduba chocolate, nispero, rosindinha, chicle, gutta hang kang, and combinations thereof. The preferred synthetic elastomer and natural elastomer concentrations vary depending on whether the chewing gum in which the base is used is adhesive or conventional, bubble gum or regular gum. Preferred natural elastomers include natural rubber, jelutong, chicle, sorva and massaranduba balata.

A typical gum base containing an S-SBR made according to the present invention has a modulus (a measure of force to stretch) of 100 to 600 kPa at 40°C (measured on a Rheometric Dynamic Analyzer with dynamic temperature steps, 0-100°C at 3°C/min; parallel plate; 0.5% strain; 10 rad/s). A preferred S-SBR-containing gum base made according to the present invention has a modulus of 200 to 500 kPa and still more preferably between 300 to 400 kPa.

The gum base also may include elastomer plasticizers (also called elastomer solvents), such as terpene resins and natural rosin esters, as well as other elastomer plasticizers. Gum bases also may include plastic resins such as polyvinyl acetate, polyethylene, and vinyl acetate - vinyl laurate copolymers.

Suitable elastomer plasticizers useful in this invention include, but are not limited to, natural rosin esters, often called estergums, such as glycerol esters of partially hydrogenated rosin, glycerol esters of polymerized rosin, glycerol esters of partially or fully dimerized rosin, glycerol esters of rosin, pentaerythritol esters of partially hydrogenated rosin, methyl and partially hydrogenated methyl esters of rosin, pentaerythritol esters of rosin, glycerol esters of wood rosin, glycerol esters of gum rosin; synthetics such as terpene resins derived from alpha-pinene, beta-pinene, and/or d-limonene; and any suitable combinations of the foregoing. The preferred elastomer plasticizers also will vary depending on the specific application, and on the type of elastomer which is used. For example, in one particular embodiment, an ester gum is selected for use in combination with the S-SBR (random, or combination of random and block), and/or E-SBR.

In addition to natural rosin esters, also called resins, the elastomer plasticizers may include various other types of plastic resins. These include polyvinyl acetate having a GPC weight average molecular weight of about 2,000 to about 90,000, polyisoprene, polyethylene, vinyl acetate-vinyl laurate copolymer having vinyl laurate content of about 5 to about 50 percent by weight of the copolymer, and combinations thereof. Preferred weight average molecular weights (by GPC) for polyisobutylene are 50,000 to 80,000 and for polyvinyl acetate are 10,000 to 65,000 (with higher molecular weight polyvinyl acetates typically used in bubble gum base). For vinyl acetate-vinyl laurate, vinyl laurate content of 10-45 percent by weight of the copolymer is preferred. Preferably, a gum contains a plastic resin in addition to other materials functioning as elastomer plasticizers.

Additionally, the gum base can include fillers/texturizers and softeners/emulsifiers. Softeners are added to chewing gum in order to optimize the chewability and mouth feel of the gum. Softeners/emulsifiers that are typically used include tallow, hydrogenated tallow, hydrogenated and partially hydrogenated vegetable oils, cocoa butter, glycerol monostearate, glycerol triacetate, lecithin, and combinations thereof. Lecithin and glycerol monostearate also function as emulsifiers to improve compatibility of the various gum base components.

Fillers/texturizers are typically inorganic, water insoluble powders such as magnesium and calcium carbonate, ground limestone, silicate types such as magnesium and aluminum silicate, clay, alumina, talc, titanium oxide, mono-, di- and tri-calcium phosphate. Insoluble organic fillers including cellulose polymers such as wood as well as combinations of any of these may also be used.

Selection of various components in chewing gum bases or chewing gum formulations of this invention typically are dictated by factors, including for example the desired properties (e.g., physical (mouthfeel), taste, odor, and the like) and/or applicable regulatory requirements (e.g., in order to have a food grade product, food grade components, such as food grade approved oils like vegetable oil, may be used in place of oils more commonly added to SBR, such as naphthenic oil, which may be added when a high styrene content and/or high molecular weight material is prepared to make processing easier).

As previously noted, S-SBR may be used alone; that is, about 100 weight% of the elastomeric component of the gum base may be S-SBR as detailed herein. Alternatively, however, the S-SBR detailed herein may be only a portion of the elastomeric component of the gum base (e.g., at least about 25%, at least about 50%, at least about 75%, or more, and less than about 100%, based on the total weight of the elastomeric component). More specifically, the S-SBR may alternatively be blended with one or more other polymers, the combined total of these polymers thus accounting for about 100 weight% of the elastomeric component of the gum base. For example, in various embodiments the S-SBR detailed herein may be blended with a polymer, such as a SBR block copolymer prepared by solution polymerization (i.e., block S-SBR), and/or a SBR random copolymer prepared by emulsion polymerization (i.e., E-SBR).

In various particular embodiments, the gum base formulation of the present invention may exhibit one or more of the following properties:

| PROPERTY | Maximum | Minimum |
|---|---|---|
| Softening point (°C)¹ | 62 | 50 |
| Ash content (%wt)² | 31 | 20 |
| Hardness @ 37°C (g)³ | 9000 | 5800 |
| Cohesiveness @ 37°C⁴ | 0.40 | 0.54 |
| Storage Modulus (kPa) @ 40°C⁵ | 540 | 130 |
| Loss modulus (kPa) @ 40° C⁶ | 410 | 120 |
| Energy dissipation factor (Tan delta @ 40°C)⁷ | 0.92 | 0.55 |

| | | |
|---|---|---|
| Test Methods: ¹Ring & Ball Method ²ASTM D5667 ³Stevens QTS25 texture analyzer from Brookfield Engineering Laboratories (Boston, MA) (fixed distance (2 mm) punch test by 6 mm diameter stainless steel probe at 38.6°C); Hardness (g) = Maximum load on first cycle. ⁴Stevens QTS25 texture analyzer (fixed distance (2 mm) punch test by 6 mm diameter stainless steel probe at 38.6°C); Cohesiveness = Ratio of total positive work done in 2nd cycle to that in 1st cycle. ⁵Rheometric Dynamic Analyzer (dynamic temperature steps, 0-100°C at 3°C/min; parallel plate; 0.5% strain; 10 rad/s) ⁶Rheometric Dynamic Analyzer (dynamic temperature steps, 0-100°C at 3°C/min; parallel plate; 0.5% strain; 10 rad/s) ⁷Rheometric Dynamic Analyzer (dynamic temperature steps, 0-100°C at 3°C/min; parallel plate; 0.5% strain; 10 rad/s) | | |

The physical properties listed above are exemplary and may be suitable for a particular type of gum product, but the present invention is not limited to gum bases exhibiting properties within these ranges or chewing gum products containing gum bases exhibiting these properties.

### III. Random and Block S-SBR

S-SBR useful in this invention present invention is typically in the form of a random copolymer. Use of a random S-SBR (rather than a block S-SBR) produces a gum base and chewing gum which has a mouthfeel similar to bases and chewing gums containing butyl rubber. However, the elastomeric component of chewing gums of the present invention may also include a blend of random S-SBR and block S-SBR. In particular, the block portion of the elastomeric component of the gum base of the present invention may include a styrene-diene block copolymer having two or more hard segments or blocks of polystyrene and at least one soft, or comparatively more flexible, segment or block of, for example, a polydiene, such as a polybutadiene or polyisoprene, there between.

It is to be noted that, as used herein, "block copolymer" generally refers to a polymer comprising at least two segments or blocks of differing composition, having any one of a number of different architectures, where the monomers are not incorporated into the polymer architecture in a solely statistical or uncontrolled manner. Block copolymers suitable for use in accordance with the present invention are also described, for example, in Published U.S. Patent Application 2007/0172541.

### IV. Optional Additives

As for the additional additives or components that may be utilized in the chewing gum base of the present invention, it is to be noted that the determination of which of these to use, as well as the amount thereof, may be achieved using means known in the art. Typically these include colors, whiteners and antioxidants.

Colorants and whiteners may include FD&C-type dyes and lakes, fruit and vegetable extracts, titanium dioxide, and combinations thereof.

Antioxidants such as BHA, BHT, tocopherols, propyl gallate and other food acceptable antioxidants may be employed to prevent oxidations of fats, oils and elastomers in the gum base.

The base may or may not include wax which acts as a softener. An example of a wax-free gum base is disclosed in U.S. Patent No. 5,286,500.

### V. Chewing Gum Formulations

In addition to a water-insoluble gum base portion, a typical chewing gum composition includes a water-soluble bulk (or bulking agent) portion and one or more flavoring agents. The water-soluble portion can include bulk sweeteners, high intensity sweeteners, binders, flavoring agents, water-soluble softeners, gum emulsifiers, colorants, acidulants, fillers, antioxidants, and other components that provide desired attributes.

Water-soluble softeners, which may also known as water-soluble plasticizers and plasticizing agents, generally constitute between approximately 0.5 to about 15% by weight of the chewing gum. Water-soluble softeners may include glycerin, lecithin, and combinations thereof. Aqueous sweetener solutions such as those containing sorbitol, hydrogenated starch hydrolysates (HSH), corn syrup and combinations thereof, may also be used as softeners and binding agents (binders) in chewing gum.

Bulk sweeteners include both sugar and sugarless components. Bulk sweeteners typically constitute 5 to about 95% by weight of the chewing gum, more typically, 20 to 80% by weight, and more commonly, 30 to 60% by weight of the gum.

Sugar sweeteners generally include saccharide-containing components commonly known in the chewing gum art, including, but not limited to, sucrose, dextrose, maltose, dextrin, dried invert sugar, fructose, galactose, corn syrup solids, and the like, alone or in combination.

Sorbitol can be used as a sugarless sweetener. Additionally, sugarless sweeteners can include, but are not limited to, other sugar alcohols such as mannitol, xylitol, hydrogenated starch hydrolysates, maltitol, lactitol, isomalt, erythritol and the like, alone or in combination.

High intensity artificial sweeteners can also be used in combination with the above. Preferred sweeteners include, but are not limited to sucralose, aspartame, salts of acesulfame, alitame, saccharin and its salts, cyclamic acid and its salts, neotame, glycyrrhizin, dihydrochalcones, thaumatin, monellin, and the like, alone or in combination. In order to provide longer lasting sweetness and flavor perception, it may be desirable to encapsulate or otherwise control the release of at least a portion of the artificial sweetener. Such techniques as wet granulation, wax granulation, spray drying, spray chilling, fluid bed coating, coacervation, and extrusion may be used to achieve the desired release characteristics.

Usage level of the artificial sweetener will vary greatly and will depend on such factors as potency of the sweetener, rate of release, desired sweetness of the product, level and type of flavor used and cost considerations. Thus, the active level of artificial sweetener may vary from 0.02 to about 8 wt.%. When carriers used for encapsulation are included, the usage level of the encapsulated sweetener will be proportionately higher.

If a low calorie gum is desired, a low caloric bulking agent can be used. Examples of low caloric bulking agents include: polydextrose; Raftilose, Raftilin; fructooligosaccharides (NutraFlora); Palatinose oligosaccharide; Guar Gum Hydrolysate (Sun Fiber); or indigestible dextrin (Fibersol). However, other low calorie bulking agents can be used. In addition, the caloric content of a chewing gum can be reduced by increasing the relative level of gum base while reducing the level of caloric sweeteners in the product. This can be done with or without an accompanying decrease in piece weight.

A variety of flavoring agents can be used. The flavor can be used in amounts of approximately 0.1 to about 15 weight percent of the gum, and preferably, about 0.2 to about 5%. Flavoring agents may include essential oils, synthetic flavors or mixtures thereof including, but not limited to, oils derived from plants and fruits such as citrus oils, fruit essences, peppermint oil, spearmint oil, other mint oils, clove oil, oil of wintergreen, anise and the like. Artificial flavoring agents and components may also be used. Natural and artificial flavoring agents may be combined in any sensorially acceptable fashion. Sensate components which impart a perceived thermal response while chewing, such as a cooling or heating effect, also may be included. Such components include cyclic and acyclic carboxamides, menthol derivatives, and capsaicin among others. Acidulants may be included to impart tartness.

### VI. Gum Base and Chewing Gum Manufacturing Processes

The present invention, it is believed, can be used with a variety of processes for manufacturing chewing gum. For example, chewing gum base can be made by conventional batch mixing processes or continuous mixing processes. Process temperatures are generally about 120 to 160°C for about 1.5 to 2 hours. Generally, rubber compounding is done first in a combination of smearing, stretching, folding, dividing, and recombining along with any needed filler. S-SBR may be compound together with any other rubber used in a formulation. Next, elastomer plasticizers such as terpene resins or ester gums are added followed by plastic resins such as polyvinyl acetate. This is followed by the addition of softeners and emulsifiers such as waxes, fats, oils, and any other emulsifiers. The completed base is then cooled and processed into pellets or slabs.

Chewing gum is generally manufactured by sequentially adding the various chewing gum ingredients to commercially available mixers known in the art. After the ingredients have been thoroughly mixed, the chewing gum mass is discharged from the mixer and shaped into the desired form, such as by rolling into sheets and cutting into sticks, extruding into chunks, or casting into pellets.

Generally, ingredients are mixed by first melting the gum base and adding it to the running mixer. The gum base may alternatively be melted in the mixer. Color and emulsifiers can be added at this time.

A chewing gum softener such as glycerin can be added next along with part of the bulk portion. Further parts of the bulk portion may then be added to the mixer. Flavoring agents are typically added with the final part of the bulk portion. The entire mixing process typically takes from five to fifteen minutes, although longer mixing times are sometimes required.

By way of further example, gum bases typically are prepared by batch process using essentially any standard, commercially available mixer known in the art (e.g., a Sigma blade mixer), which involves sequentially adding an amount of the elastomer component, elastomer solvent and filler to a heated mixer. The initial amount of ingredients is determined by the working capacity of the mixing kettle in order to attain a proper consistency. After the initial ingredients have massed homogeneously, the balance of the elastomer solvent, filler, softeners, etc. are added in a sequential manner until a completely homogeneous molten mass is attained. This can usually be achieved in one to three hours, depending on the formulation. The final mass temperature may typically be between about 70°C and about 130°C, with a temperature between about 100°C and about 120°C being more typical. The completed molten mass is emptied from the mixing kettle into coated or lined pans, extruded or cast into any desirable shape and allowed to cool and solidify.

Alternatively, however, continuous processes using mixing extruders, which are generally known in the art, may optionally be used to prepare the gum base. After the initial ingredients have massed homogeneously and have been compounded for the time desired, the balances of the base ingredients are added in a sequential manner until a completely homogeneous molten mass is attained. Typically, any remainder of elastomer and elastomer plasticizer are added after the initial compounding time. The optional waxes and the oils are typically added after the elastomer and elastomer plasticizer. Then the mass is allowed to become homogeneous before discharging for extrusion.

Exemplary methods of extrusion, which may optionally be used in accordance with the present invention, include the following : (i) U.S. Pat. No. 6,238,710 claims a method for continuous chewing gum base manufacturing, which entails compounding all ingredients in a single extruder; (ii) U.S. Pat. No. 6,086,925 discloses the manufacture of chewing gum base by adding a hard elastomer, a filler and a lubricating agent to a continuous mixer; (iii) U.S. Pat. No. 5,419,919 discloses continuous gum base manufacture using a paddle mixer by selectively feeding different ingredients at different locations on the mixer; and, (iv) yet another U.S. Pat. No. 5,397,580 discloses continuous gum base manufacture wherein two continuous mixers are arranged in series and the blend from the first continuous mixer is continuously added to the second continuous mixer. In an alternative continuous process, ingredients are added continuously at various points along the length of the extruder, in which case the transit time through the extruder could be substantially less than an hour.

For example, as disclosed in U.S. Patent No. 6,858,237, chewing gums of the present invention may be prepared by a continuous process comprising the steps of: a) adding a gum base into a high efficiency continuous mixer; b) adding at least one sweetener and at least one flavor into the continuous mixer, and mixing said sweetener and flavor with the remaining ingredients to form a chewing gum product; and c) wherein after one of the ingredients is added to the mixer, it is subjected to a conveyor element on a screw of a single high efficiency continuous mixer.

This invention is illustrated, but not limited, by the following examples and illustrative runs:

### EXAMPLES

A Solution-SBR elastomer manufactured by Petroflex was used to prepare a gum base of the present invention. The S-SBR was a random copolymer having 50% bound styrene, a molecular weight of about 260,000 and a Mooney Viscosity (ML 1 +4 at 100°C) of 58. As a control, an identical base was prepared using a conventional Emulsion-SBR. The two gum bases were prepared according to the formula in Table 1 with usage levels expressed in weight percent.

| Table 1 | | |
|---|---|---|
| Ingredient | Example 1 (Inventive) | Run A (Comparative) |
| Petroflex Solution SBR | 11.77 | --- |
| Emulsion-SBR | --- | 11.77 |
| Glycerol Ester of Gum Rosin | 11.93 | 11.93 |
| Glycerol Ester of Dimerized Rosin | 11.93 | 11.93 |
| Glycerol Monostearate | 1.94 | 1.94 |
| Medium MW PVAc | 6.25 | 6.25 |
| High MW PVAc | 14.00 | 14.00 |
| Acetylated Monoglyceride | 1.50 | 1.50 |
| Glycerol Triacetate | 1.25 | 1.25 |
| Microcrystalline Wax | 6.12 | 6.12 |
| Hydrogenated Soybean Oil | 7.23 | 7.23 |
| Calcium Carbonate | 26.00 | 26.00 |
| BHT | 0.08 | 0.08 |
| Total | 100.00 | 100.00 |

Gum bases of Example 1 and Run A were used to prepare chewing gums according to the formulas in Table 2 with usage levels expressed in weight percent.

| Table 2 | | |
|---|---|---|
| Ingredient | Example 2 (Inventive) | Run B (Comparative) |
| Gum Base of Ex. 1 | 21.20 | --- |
| Gum Base of Run A | --- | 21.20 |
| Sugar | 61.55 | 61.55 |
| Corn Syrup | 15.00 | 15.00 |
| Peppermint Flavor | 0.90 | 0.90 |
| Glycerin | 1.20 | 1.20 |
| Lecithin | 0.15 | 0.15 |
| Total | 100.00 | 100.00 |

The chewing gums of Examples 2 and Run B were each chewed by seven trained panelists who were asked to rate the intensity of any off-notes (objectionable odor or taste characteristics) on a scale of 0 (No off-notes) to 3 (Intense off-notes). The gums were rated after one minute and eight minutes of chewing and the ratings were averaged across the panelists. The results of this test are presented in Table 3.

| Table 3 | | |
|---|---|---|
| | Intensity of Off-Notes | |
| Chewing Time (minutes) | Example 2 (Inventive) | Run B (Comparative) |
| 1 | 0.14 | 1.07 |
| 8 | 0.50 | 1.07 |

The Solution-SBR chewing gum (Ex. 2) had much lower off-notes than the Emulsion-SBR (Run B).

Illustrative Examples 3-14 of chewing gum bases which can be prepared using the Solution-SBRs of the present invention are provided in Tables 4 - 6.

| Table 4 | | | | |
|---|---|---|---|---|
| Ingredient | Example 3 | Example 4 | Example 5 | Example 6 |
| Solution-SBR (5000,000 MW) | 10.00 | 5.00 | 2.00 | 7.00 |
| Polyisobutylene (Medium MW) | 2.00 | 4.00 | 5.00 | -- |
| Butyl Rubber | -- | 5.00 | 8.00 | 3.00 |
| Polyvinyl Acetate (Low MW) | 15.00 | 15.00 | 25.00 | 20.00 |
| Polyvinyl Acetate (High MW) | 5.00 | -- | 2.00 | 5.00 |
| Estergum | 20.00 | 15.00 | 20.00 | 10.00 |
| Terpene Resin | -- | 15.00 | 20.00 | 10.00 |
| Hydrog. Palm Oil | 5.00 | 4.00 | 5.00 | 7.00 |
| Hydrog. Cottonseed Oil | 5.00 | 4.00 | -- | 5.00 |
| Glycerol Monostearate | 4.00 | 4.00 | 5.00 | 7.00 |
| Triacetin | 0.70 | -- | 0.30 | 0.70 |
| Paraffin | 5.00 | 8.00 | -- | 2.00 |
| Calcium Carbonate | 28.30 | -- | 7.70 | 26.30 |
| Talc | -- | 21.00 | -- | -- |
| Total | 100.00 | 100.00 | 100.00 | 100.00 |

Note that for polyisobutylene, low molecular weight is considered to be less than 100,000 Daltons. Medium molecular weight is considered to be 100,000 to 500,000, while high molecular weight is considered to be over 500,000 Daltons.

For polyvinylacetate, low molecular weight is considered to be less than 20,000 Daltons. Medium molecular weight is considered to be 20,000 to 60,000, while high molecular weight is considered to be 60,000 to 100,000 Daltons.

| Table 5 | | | | |
|---|---|---|---|---|
| Ingredient | Example 7 | Example 8 | Example 9 | Example 10 |
| Solution-SBR (600,000 MW) | 9.00 | 5.00 | 3.00 | 7.00 |
| Polyisobutylene (Low MW) | -- | 2.00 | 5.00 | 5.00 |
| Butyl Rubber | -- | 5.00 | -- | 3.00 |
| Polyvinyl Acetate (Med. MW) | 10.00 | 15.00 | 20.00 | 25.00 |
| Polyvinyl Acetate (High MW) | 2.00 | -- | 5.00 | -- |
| Estergum | 30.00 | 10.00 | 6.00 | 15.00 |
| Terpene Resin | -- | 15.00 | 20.00 | 15.00 |
| Hydrog. Palm Oil | -- | 5.00 | 8.00 | 5.00 |
| Hydrog. Cottonseed Oil | 10.00 | 5.00 | 5.00 | 8.00 |
| Glycerol Monostearate | 5.00 | 5.00 | 8.00 | 2.00 |
| Triacetin | 0.30 | -- | 0.70 | -- |
| Paraffin | 5.00 | -- | -- | -- |
| Calcium Carbonate | 28.70 | -- | 19.30 | -- |
| Talc | -- | 33.00 | -- | 15.00 |
| Total | 100.00 | 100.00 | 100.00 | 100.00 |

| Table 6 | | | | |
|---|---|---|---|---|
| Ingredient | Example 11 | Example 12 | Example 13 | Example 14 |
| SoLution-SBR (400,000 MW) | 11.00 | 4.00 | 12.00 | 2.20 |
| Polyisobutylene (High MW) | -- | 5.00 | -- | 9.00 |
| Butyl Rubber | 2.00 | -- | -- | -- |
| Polyvinyl Acetate (Low MW) | 15.00 | 25.00 | 20.00 | 35.00 |
| Polyvinyl Acetate (High MW) | 5.00 | -- | 10.00 | -- |
| Estergum | 25.00 | 10.00 | -- | -- |
| Terpene Resin | 5.00 | 10.00 | 10.00 | 30.00 |
| Hydrog. Soybean Oil | 10.00 | 8.00 | 8.00 | -- |
| Hydrog. Cottonseed Oil | -- | -- | 8.00 | 10.00 |
| Part. Hydrog. Cottonseed oil | 4.00 | 5.00 | 8.00 | 6.70 |
| Glycerol Monostearate | -- | 2.00 | 5.00 | 5.80 |
| Triacetin | -- | -- | 1.00 | -- |
| Lecithin | 1.50 | -- | 0.50 | -- |
| Calcium Carbonate | 21.50 | 31.00 | -- | 1.30 |
| Talc | -- | -- | 17.50 | -- |
| Total | 100.00 | 100.00 | 100.00 | 100.00 |

Gum bases of Examples 3 - 14 can be used to formulate sugar or sugarless chewing gums according to commonly known formulations. In the case of Example 13, the base may be used to formulate a non-tack chewing gum. That is, a chewing gum which has reduced adhesion to dental surfaces. In the case of Example 14, the gum base may be used in a high-lecithin chewing gum formula to prepare a chewing gum with reduced adhesion to environmental surfaces.

## Claims

1. A gum base comprising a solution-polymerized styrene-butadiene random copolymer elastomer which is cud-forming and chewable at mouth temperature.

2. A gum base of claim 1 which contains a softener, an emulsifier, and a filler.

3. A gum base of claim 2 which contains at least one elastomer plasticizer and a plastic resin.

4. A gum base of claim 1, 2, or 3 which contains between 2 and 30 wt.% elastomer.

5. A gum base of claim 1, 2, or 3 in which the solution-polymerized styrene-butadiene random copolymer elastomer contains between 25 and 50 wt.% polymerized styrene monomer.

6. A gum base of claim 1, 2, or 3 in which the molecular weight of the solution-polymerized styrene-butadiene random copolymer elastomer is between 300,000 and 750,000.

7. A gum base of claim 1, 2, or 3 in which the Mooney Viscosity (ML 1+4 at 100°C) of the solution-polymerized styrene-butadiene random copolymer elastomer is between 50 and 75.

8. A gum base of claim 1 in which the Mooney Viscosity (ML 1+4 at 100°C) of the solution-polymerized styrene-butadiene random copolymer elastomer is between 57 and 67.

9. A gum base of claim 1 in which the modulus of the gum base is 100 to 600 kPa at 40°C.

10. A gum base of claim 1, 2, or 3 in which the solution-polymerized styrene-butadiene random copolymer elastomer comprises at least 25 wt.% of the elastomeric component in the gum base.

11. A gum base of claim 10 in which the elastomeric component in the gum base also contains butyl rubber, polyisobutylene, emulsion SBR, or block solution SBR.

12. A chewing gum comprising:
a) a water-insoluble gum base portion comprising solution-polymerized styrene-butadiene random copolymer elastomer which is cud-forming and chewable at mouth temperature;
b) a water-soluble bulk portion; and
c) at least one flavor component.

13. A chewing gum of claim 12 which contains a binder, water-soluble softeners, and gum emulsifiers.

14. A chewing gum of claim 12 or 13 which contains 10 to 50 wt.% gum base.

15. A chewing gum of claim 12, 13, or 14 in which the gum base contains 5 to 20 wt.% elastomer.

## Patentansprüche

1. Eine Kaugummibase bestehend aus einem Iösungspolymerisierten Styrol-/Butadien-Random-Copolymer-Elastomer, das bei Mundtemperatur kaugummiformend und kaubar ist.

2. Eine Kaugummibase nach Anspruch 1, die einen Weichmacher, einen Emulgator und einen Füllstoff enthält.

3. Eine Kaugummibase nach Anspruch 2, die mindestens einen Elastomer-Weichmacher und einen Kunstharz enthält.

4. Eine Kaugummibase nach Anspruch 1, 2 oder 3, die 2-30 Gewichtsprozent Elastomer enthält.

5. Eine Kaugummibase nach Anspruch 1, 2 oder 3, bei der das Iösungspolymerisierte Styrol-/Butadien-Random-Copolymer-Elastomer 25-50 Gewichtsprozent polymerisiertes Styrolmonomer enthält.

6. Eine Kaugummibase nach Anspruch 1, 2 oder 3, bei der das Molekulargewicht des Iösungspolymerisierten Styrol-/Butadien-Random-Copolymer-Elastomers zwischen 300.000 und 750.000 beträgt.

7. Eine Kaugummibase nach Anspruch 1, 2 oder 3, bei der die Mooney-Viskosität (ML 1 +4, 100 °C) des lösungspolymerisierten Styrol-/Butadien-Random-Copolymer-Elastomers zwischen 50 und 75 beträgt.

8. Eine Kaugummibase nach Anspruch 1, bei der die Mooney-Viskosität (ML 1+4, 100 °C) des lösungspolymerisierten Styrol-/Butadien-Random-Copolymer-Elastomers zwischen 57 und 67 beträgt.

9. Eine Kaugummibase nach Anspruch 1, bei der der Modul der Kaugummibase bei 40 °C zwischen 100 und 600 kPa beträgt.

10. Eine Kaugummibase nach Anspruch 1, 2 oder 3, bei der das lösungspolymerisierte Styrol-/Butadien-Random-Copolymer-Elastomer in der Kaugummibase mindestens 25 Gewichtsprozent der elastomerischen Komponente enthält.

11. Eine Kaugummibase nach Anspruch 10, bei der die elastomerische Komponente in der Kaugummibase außerdem Butylkautschuk, Polyisobutylen, Emulsions-SBR oder Lösungs-SBR enthält.

12. Ein Kaugummi bestehend aus:
a) einer wasserunlöslichen Kaugummibasekomponente bestehend aus Iösungspolymerisiertem Styrol-/Butadien-Random-Copolymer-Elastomer, das bei Mundtemperatur kaugummiformend und kaubar ist;
b) einer wasserlöslichen Massenkomponente und
c) mindestens einer Geschmacksstoffkomponente.

13. Ein Kaugummi nach Anspruch 12, der ein Bindemittel, wasserlösliche Weichmacher und Kaugummi-Emulgatoren enthält.

14. Ein Kaugummi nach Anspruch 12 oder 13, der 10-50 Gewichtsprozent Kaugummibase enthält.

15. Ein Kaugummi nach Anspruch 12, 13 oder 14, bei dem die Kaugummibase 5-20 Gewichtsprozent Elastomer enthält.

## Revendications

1. Gomme-base comprenant un élastomère de copolymère aléatoire de styrène butadiène polymérisé en solution, favorisant l'ingestion et masticable à température buccale.

2. Gomme-base selon la revendication 1, contenant un ramollissant, un émulsifiant et un agent de remplissage.

3. Gomme-base selon la revendication 2, contenant au moins un plastifiant élastomère et une résine plastique.

4. Gomme-base selon la revendication 1, 2 ou 3, contenant entre 2 et 30 % en poids d'élastomère.

5. Gomme-base selon la revendication 1, 2 ou 3, dans laquelle l'élastomère de copolymère aléatoire de styrène butadiène polymérisé en solution contient entre 25 et 50 % en poids de monomère de styrène polymérisé.

6. Gomme-base selon la revendication 1, 2 ou 3, dans laquelle le poids moléculaire de l'élastomère de copolymère aléatoire de styrène butadiène polymérisé en solution est compris entre 300 000 et 750 000.

7. Gomme-base selon la revendication 1, 2 ou 3, dans laquelle la consistance Mooney (ML 1 +4 à 100°C) de l'élastomère de copolymère aléatoire de styrène butadiène polymérisé en solution est comprise entre 50 et 75.

8. Gomme-base selon la revendication 1, dans laquelle la consistance Mooney (ML 1+4 à 100°C) de l'élastomère de copolymère aléatoire de styrène butadiène polymérisé en solution est comprise entre 57 et 67.

9. Gomme-base selon la revendication 1, dans laquelle le module de la gomme-base est compris entre 100 et 600 kPa à 40°C.

10. Gomme-base selon la revendication 1, 2 ou 3, dans laquelle l'élastomère de copolymère aléatoire de styrène butadiène polymérisé en solution se compose d'au moins 25 % en poids du composant élastomère de la gomme-base.

11. Gomme-base selon la revendication 10, dans laquelle le composant élastomère de la gomme-base contient également du caoutchouc butylique, du poly-isobutylène, du caoutchouc styrène-butadiène en émulsion ou du caoutchouc styrène-butadiène en solution en bloc.

12. Gomme à mâcher, comprenant :
a) une partie de gomme-base insoluble dans l'eau, comprenant un élastomère de copolymère aléatoire de styrène butadiène polymérisé en solution, favorisant l'ingestion et masticable à température buccale ;
b) une partie de masse hydrosoluble ; et
c) au moins un composant d'arôme.

13. Gomme à mâcher selon la revendication 12, contenant un liant, des ramollissants hydrosolubles et des émulsifiants de gomme.

14. Gomme à mâcher selon la revendication 12 ou 13, contenant entre 10 et 50 % en poids de gomme-base.

15. Gomme à mâcher selon la revendication 12, 13 ou 14, dans laquelle la gomme-base contient entre 5 et 20 % en poids d'élastomère.
